# EUROPEAN PATENT APPLICATION

(11) **EP 4 717 430 A1**
(43) Date of publication of application: **01.04.2026**
(21) Application number: 25203289.1
(22) Date of filing: 19.09.2025
(51) Int. Cl.: B29C 45/14, B29L 31/08

(54) **APPARATUS AND METHOD FOR PRODUCING IMPELLERS BY MOLDING OF PLASTIC MATERIAL**

(30) Priority: 27.09.2024 IT 202400021472
(71) Applicant: SIT S.P.A., 35129 Padova (IT)
(72) Inventor: Franceschin, Tiziano, 35129 Padova (PD) (IT)
(74) Representative: Petraz, Gilberto Luigi

(57) **Abstract**

Apparatus (10) and method for producing impellers by injection molding using a mold (200) and thermoplastic material, wherein each impeller comprises both a central hub and a plurality of blades, made in a single body with the thermoplastic material, and also a metal insert (11) with a substantially tubular shape, configured to be embedded in the central hub of the impeller during the injection molding and provided with a central through hole (12) coaxial to a first longitudinal axis (X1). Two support, or resting, elements (20, 21) are configured to be mounted on the mold (200) coaxial to a central second longitudinal axis (X2) and are each provided with a conical part (22, 26) configured to cooperate with two corresponding conical flares (15, 17) created at the opposite ends of the central through hole (12) of the metal insert (11).

## Description

### FIELD OF THE INVENTION

The present invention concerns an apparatus and a method for producing, by molding of plastic material, impellers for example, but not only, for axial fans for heat pumps, air conditioners, or ventilation systems.

### BACKGROUND OF THE INVENTION

Various apparatuses and methods are known for producing impellers by injection molding of plastic material, for example thermoplastic material, which can be used in particular, but not only, in the field of axial fans, for example those with an internal rotor, for heat pumps, air conditioners, or ventilation systems.

An impeller of the above type usually comprises a central hub and a plurality of blades, distributed angularly at equal distances, which are manufactured together by injection molding of at least one thermoplastic material, for example polypropylene (PP), possibly reinforced with fiberglass, fiberglass reinforced polyamide (PA), or fiberglass reinforced antistatic polyamide, in order to form a single piece configured to then be mounted on a drive member, such as the shaft for example, usually cylindrical, of an electric motor.

To allow for an optimal coupling between the impeller and the drive member, it is known to insert, in the center of the hub made of plastic material and coaxially thereto, during the same molding step, an insert, usually metallic, having a central through hole which has the same diameter as the external diameter of the aforementioned drive member.

A disadvantage of these known impellers lies in the fact that it is difficult for the longitudinal axis, or central axis, of the aforementioned metal insert, which also becomes the axis of rotation of the impeller, to be perfectly perpendicular to the plane on which the impeller's blades lie, so that it is often necessary to carry out a step of correcting the possible error, or defect, of the impeller after its molding; a correction step that can also be complex and time-consuming, so it is expensive and negatively affects the cost of the finished product.

During the aforementioned correction step, long operations to verify and perfect the impeller are usually required, possibly with the addition of weights and using, as control equipment, automatic or semi-automatic balancers that identify the imbalance point and consequently the correction required.

The defects found in the production of impellers are essentially due to two causes, namely the non-homogeneity of the plastic material during the injection process, and the error in positioning the metal insert inside the impeller's plastic material hub.

To control the injection, there are sensors that, positioned inside the mold, can confirm, or not, whether the molding process is optimal.

To optimize the positioning of the metal insert, it is necessary to reduce to a minimum the coupling play between the latter and the two support elements, known to the people of skill in the art by the term "posts" or "columns", present in the mold. In the prior art, these two support elements are normally of a cylindrical shape.

In practice, unfortunately, during the molding step, due to the injection pressure of the plastic material and its withdrawal, the hole of the metal insert deforms, thus losing the possibility of a precise coupling. In order not to incur a blockage of the metal insert, it would be necessary to increase the aforementioned play, but doing so would compromise the centering. In fact, the greater the play required between the metal insert and the two support elements, the worse the quality of the centering of the insert inside the mold will be and, consequently, since the longitudinal axis of the metal insert is also the axis of rotation of the impeller, the greater the error of unbalance of the masses of the latter will be.

US5409656A discloses an injection molding apparatus and method that provide to position an insert between a fixed and a movable mold. Other known molding apparatuses are disclosed in DE4011653A1 and US2023/033850A1.

There is therefore the need to perfect an apparatus and develop the corresponding method for producing impellers that can overcome at least one of the disadvantages of the state of the art.

To do this, it is necessary to solve the technical problem of providing an apparatus for producing impellers which guarantees the coaxiality of the metal insert with that of the support, or resting, elements which are able to be associated with the mold, in order to guarantee that the impellers produced are of an excellent quality, without the need for post-molding corrections.

In particular, one purpose of the present invention is to provide an apparatus and develop a method for producing impellers by molding of plastic material that allow to obtain a product as free from construction defects as possible.

Another purpose of the present invention is to provide an apparatus and develop a method for producing impellers in which the axis of the metal insert embedded in the central hub of each impeller produced by molding is perfectly coaxial, or as coaxial as possible, to the nominal axis of the same impeller.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to resolve the technical problem described above in a new and original way, also achieving considerable advantages compared to the state of the prior art, an apparatus according to the present invention is configured to produce impellers by injection molding, using a mold and thermoplastic material, wherein each impeller comprises both a central hub and a plurality of blades, made in a single body with the thermoplastic material, and also a metal insert with a substantially tubular shape, embedded in the central hub and provided with a central through hole configured to be coupled to a corresponding command member suitable to make the impeller rotate. In addition, the central through hole is provided at its ends with a first conical flare with a first taper having a first angle and, respectively, with a second conical flare with a second taper having a second angle.

In accordance with the present invention, the apparatus comprises centering means able to be associated with, or forming part of, the mold and comprising both a first support, or resting, element provided with a first conical part with a third taper having a third angle, and also a second support, or resting, element having a second conical part with a fourth taper having a fourth angle.

In accordance with one aspect of the present invention, the third angle is greater than the first angle, preferably by at least 3°, and the fourth angle is greater than the second angle, preferably by at least 3°; moreover, the first support element and second support element are configured to cooperate with the first conical flare and with the second conical flare, respectively, of the metal insert, remaining coaxial thereto, to thus realize the perfect centering of the metal insert with the support elements and consequently with the mold, during the injection molding.

In accordance with another aspect of the present invention, thanks to the greater taper of the first conical flare compared to that of the first conical part, when they cooperate with each other, keeping the centering means coaxial to the metal insert, the first conical part is configured to contact the first conical flare only along a first circumference, and thanks to the greater taper of the second conical flare compared to that of the second conical part, when the latter cooperate with each other, keeping the centering means coaxial to the metal insert, the second conical part is configured to contact the second conical flare only along a second circumference, therefore the two circumferences result, during use, parallel to each other and perpendicular to the central through hole.

In accordance with another aspect of the present invention, when the first conical part contacts the first conical flare there is defined between them a first space with a conical circumferential shape and having a taper diverging from the first circumference toward the inside of the central through hole, due to the difference between the first angle and the third angle.

In accordance with another aspect of the present invention, when the second conical part contacts the second conical flare there is defined between them a second space with a conical circumferential shape and having a taper diverging from the second circumference toward the inside of the central through hole, due to the difference between the second angle and the fourth angle.

In accordance with another aspect of the present invention, the first angle is comprised between 10° and 30° and is preferably 25°, while the third angle is comprised between 28° and 32° and is preferably 30°.

In accordance with another aspect of the present invention, the second angle is comprised between 30° and 60° and is preferably 45°, while the fourth angle is comprised between 48° and 52° and is preferably 50°.

In accordance with another aspect of the present invention, the central through hole has a certain internal diameter, the first conical flare has a first external diameter and the second conical flare has a second external diameter; in addition, the first support element comprises both a second, cylindrical, part disposed axially on a first side of the first conical part and having a third external diameter greater than the internal diameter and smaller than the first external diameter, and also a third, cylindrical, part disposed axially on a second side of the first conical part, opposite the first side, and having a fourth external diameter smaller than the internal diameter, so that when the first conical part is in contact with the first conical flare, the third, cylindrical, part is inserted with play into the central through hole creating a third annular space between the metal insert and the third, cylindrical, part.

In accordance with another aspect of the present invention, the width of the third space is of the order of tens of micrometers, or micron (µm), and is preferably comprised between 30 µm and 100 µm, and even more preferably is 50 µm.

In accordance with another aspect, the present invention comprises a method for producing impellers by injection molding using a mold and thermoplastic material, wherein each of the impellers comprises both a central hub and a plurality of blades, made in a single body with the thermoplastic material, and also a metal insert with a substantially tubular shape, embedded in the central hub and provided with a central through hole configured to be coupled to a corresponding command member suitable to make the impeller rotate, wherein the central through hole is created so that it is provided at its ends with a first conical flare with a first taper having a first angle and, respectively, with a second conical flare with a second taper having a second angle. In particular, the method comprises:
- a first step in which centering means are created that can be associated with, or are part of, the mold and comprise both a first support, or resting, element coaxial to a central second longitudinal axis and provided with a first conical part with a third taper which forms a third angle, greater than the first angle, for example preferably by at least 3°, with the second longitudinal axis, and also a second support, or resting, element coaxial to the second longitudinal axis and with a second conical part with a fourth taper which forms a fourth angle, greater than the second angle, for example preferably by at least 3°, with the second longitudinal axis;
- a second step, following the first step, in which the first support element and the second support element are made to cooperate with the first conical flare and with the second conical flare, respectively, remaining coaxial to the metal insert, thus realizing the perfect centering of the metal insert with the support elements; and
- a third step, or molding step, following the second step, in which the thermoplastic material is injected into an injection chamber of the mold to create the blades and the central hub, embedding the metal insert in the latter.

In accordance with another aspect of the present invention, thanks to the greater taper of the first conical flare compared to that of the first conical part, when they cooperate with each other, keeping the centering means coaxial to the metal insert, the first conical part contacts the first conical flare only along a first circumference, and thanks to the greater taper of the second conical flare compared to that of the second conical part, when the latter cooperate with each other, keeping the centering means coaxial to the metal insert, the second conical part contacts the second conical flare only along a second circumference, so that the two circumferences are parallel to each other and perpendicular to the central through hole.

In accordance with another aspect of the present invention, between the first step and the second step the method also comprises, in sequence: a loading step, in which the metal insert is first positioned between the two support elements, with the latter coaxial to the metal insert, and then thrust toward the first support element; and a closing step, in which the second support element is displaced axially, first in order to take its second conical part against the second conical flare of the metal insert and then, continuing its travel, to thrust the first conical flare of the latter against the first conical part of the first support element, imparting a certain axial thrust force.

### DESCRIPTION OF THE DRAWINGS

These and other aspects, characteristics and advantages of the present invention will become apparent from the following description of an embodiment, given as a non-restrictive example with reference to the attached drawings wherein:
- fig. 1 is a schematic front view of equipment that uses an impeller made with an apparatus according to the present invention;
- fig. 2 is a schematic front view of a first impeller made with an apparatus according to the present invention;

- fig. 3 is an enlarged detail of fig. 2;
- fig. 4 is a perspective view of another type of impeller made with an apparatus according to the present invention;
- fig. 5 is a front view of an enlarged detail of an impeller's metal insert, the metal insert being suitable to cooperate with an apparatus according to the present invention;
- fig. 6 is a left lateral view of the detail of fig. 5;
- fig. 7 is a section along line VII-VII of fig. 6;
- fig. 8 is an enlargement of fig. 7;
- fig. 9 is a schematic view showing a coupling between an impeller's metal insert and two support elements of the apparatus according to the present invention;
- fig. 10 is a schematic view of a loading step of a method for producing impellers according to the present invention;
- fig. **11** is a schematic view of a closing step of the method for producing impellers according to the present invention;
- fig. 12 is a schematic view of a molding step of the method for producing impellers according to the present invention;
- fig. 13 is an enlarged detail of fig. 12.

We must clarify that the phraseology and terminology used in the present description, as well as the figures in the attached drawings also in relation as to how described, have the sole function of better illustrating and explaining the present invention, their purpose being to provide a non-limiting example thereof, since the scope of protection is defined by the claims. We must also clarify that the drawings are not to scale.

To facilitate comprehension, the same reference numbers have been used, where possible, to identify identical common elements in the drawings.

### DESCRIPTION OF AN EMBODIMENT OF THE PRESENT INVENTION

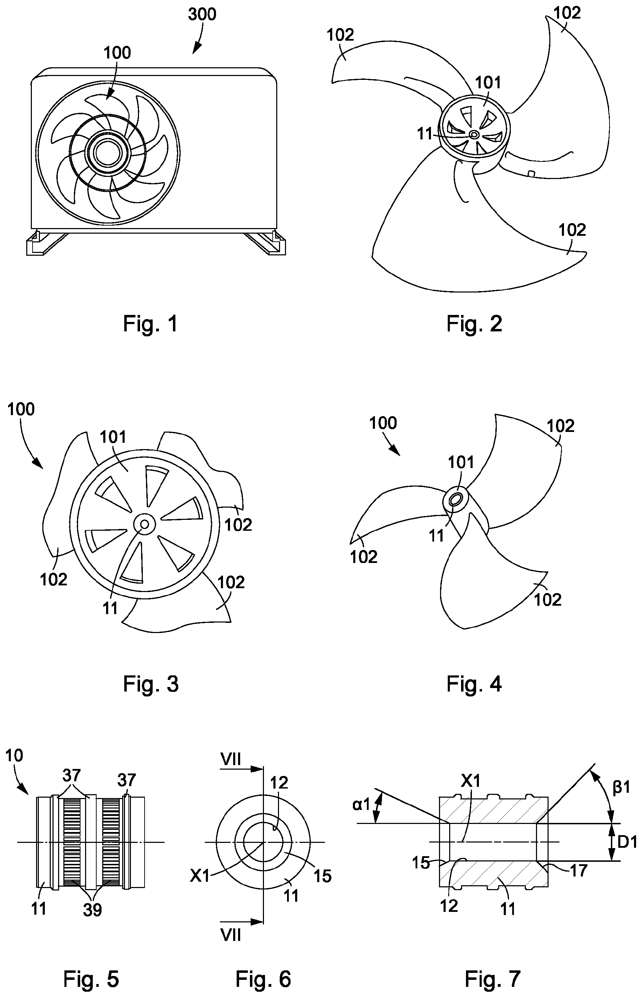

With reference to figs. from 9 to 13, an apparatus 10 according to the present invention is described below, which is configured to produce impellers 100 (figs. from 1 to 4) usable, for example, in axial fans for heat pumps, air conditioners, such as the one shown schematically in fig. 1 and indicated generically with reference number 300, or ventilation systems.

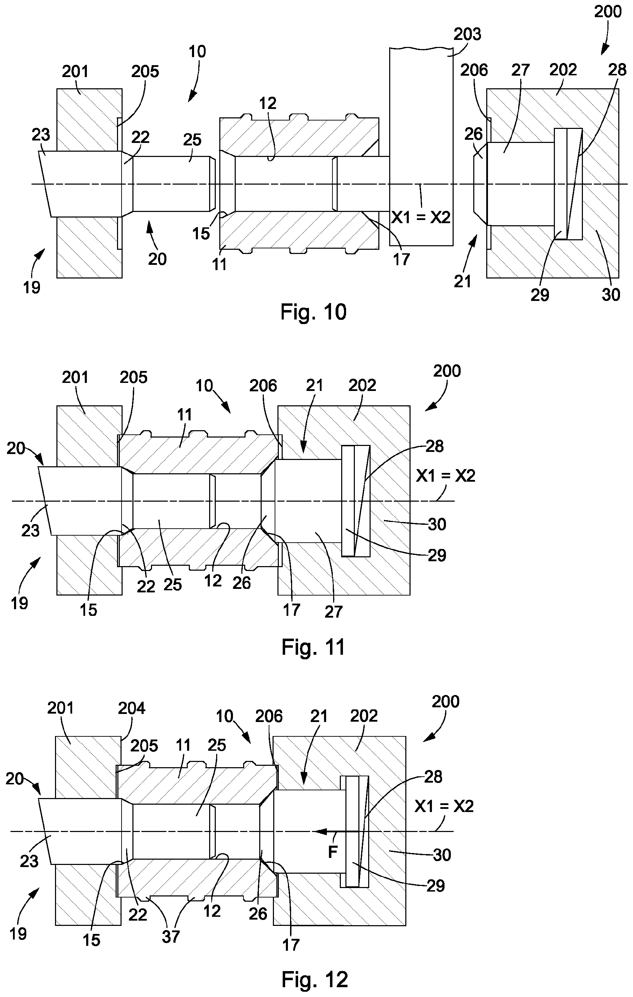

Each impeller 100 is of the type comprising a central hub 101 (figs. 2, 3 and 4) and a plurality of blades 102, for example 3 as in the embodiments shown here, made in a single body by injection molding of a thermoplastic material, for example PP, possibly reinforced with fiberglass, fiberglass reinforced PA, or fiberglass reinforced antistatic polyamide, using a mold 200 (figs. 10, 11, 12 and 13) comprising a first half-shell, or matrix, 201, usually kept in a fixed position, and a second half-shell, or punch, 202, which is usually selectively movable relative to the matrix 201 in order to define an injection chamber 204 therewith.

In the embodiment shown here, the first half-shell 201 is provided with a first front cavity 205 and the second half-shell 202 is provided with a second front cavity 206 opposing the first front cavity 205.

Each impeller 100 also comprises a metal insert 11 (figs. from 2 to 12) which contains new and original features compared to the metal inserts of the state of the prior art; features that are described in more detail below.

Like known metal inserts, the metal insert 11 is substantially tubular in shape, has a cylindrical central through hole 12 (figs. from 6 to 12), coaxial to a first longitudinal axis X1 and having a certain internal diameter D1 of the order of millimeters, for example between about 6 mm and about 30 mm, and which in the embodiment disclosed here is about 10 mm.

The metal insert 11 is configured to be embedded in the central hub 101 during the injection molding and to then be coupled to a corresponding command member, suitable to make the impeller 100 rotate and which can be of any known type whatsoever, such as for example the shaft of an electric motor, and which is not shown in the drawings.

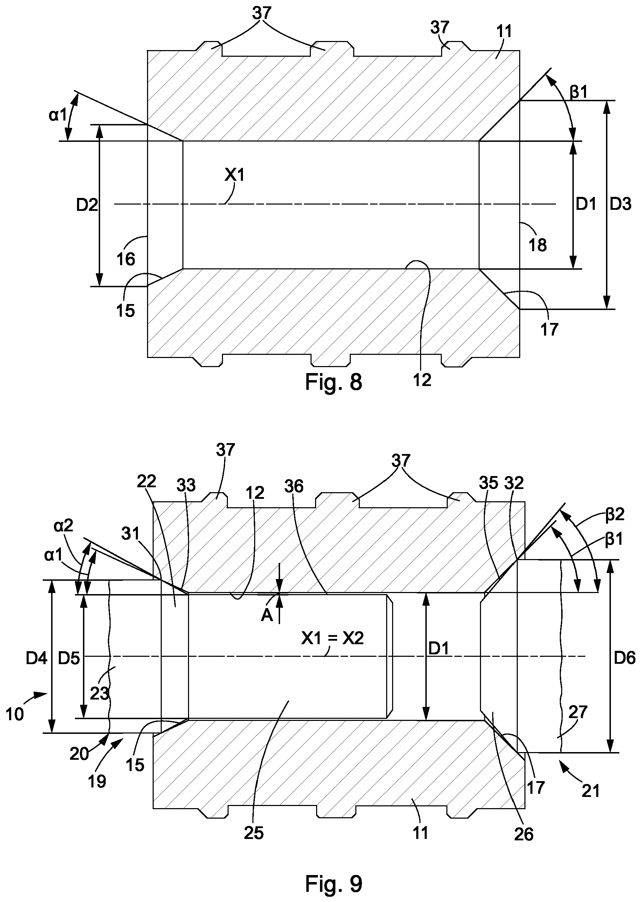

Advantageously, the metal insert 11 also comprises both a first conical flare 15 (fig. 8) created on a first end 16 of the central through hole 12 and having a first taper forming a first angle α1 with the first longitudinal axis X1, and also a second conical flare 17 created on a second end 18 of the central through hole 12, opposite the first end 16, and having a second taper forming a second angle β1 with the first longitudinal axis X1.

Some embodiments of the present invention provide that, preferably, the first angle α1 is comprised between 10° and 30°, and that the second angle β1 is comprised between 30° and 60°. In the embodiment disclosed here, the first angle α1 is 25° and the second angle β1 is 45°.

According to other embodiments, the angles α1 and β1 can be the same, or the second angle β1 can be greater than the first angle α1, or the second angle β1 can be smaller than the first angle α1.

We must clarify that the choice of the possible values of the angles α1 and β1 can be guided by, or has to take into account, the specific working techniques adopted to produce the metal insert 11. In this case, the choice of the possible values of the angles α2 and β2 can take into account the angular difference to be adopted between the angles α1 and α2 on one side and between the angles β1 and β2 on the other side.

The first conical flare 15 has a first external diameter D2, which can be comprised between 10.5 mm and 15 mm and which in the embodiment disclosed here is about 12 mm, and the second conical flare 17 has a second external diameter D3, which can be comprised between 12 mm and 18 mm and which in the embodiment disclosed here is about 15 mm.

The apparatus 10 comprises centering means 19 (figs. from 9 to 12) able to be associated with the mold 200. Some embodiments of the present invention provide that the centering means 19, instead of being able to be associated with the mold 200, are made enbloc with the half-shells 201, 202.

In particular, the centering means 19 comprise both a first support, or resting, element 20 and also a second support, or resting, element 21.

The first support, or resting, element 20 is coaxial to a central second longitudinal axis X2 and able to be associated with the first half shell 201 (figs. 10, 11 and 12) so as to be in a fixed position relative thereto and positioned in front of the second half shell 202.

The second support, or resting, element 21 is also coincident with the second longitudinal axis X2, but able to be associated with the second half shell 202, so as to be axially sliding relative thereto and positioned in front of the first half-shell 201.

Therefore, the two support, or resting, elements 20, 21 are coaxial and opposed to each other and, during use, are disposed inside the injection chamber 204 of the mold 200 where the metal insert 11 will then be inserted and the central hub 101 and the blades 102 will be formed in order to make an impeller 100, as described in detail below.

Furthermore, the first support element 20 is provided with a first conical part 22 (fig. 9), able to cooperate with the first conical flare 15.

The first conical part 22 can be located in an intermediate position between a second, cylindrical, part 23 and possibly a third part 25, also cylindrical, of the first support element 20.

In particular, the second part 23 has a third external diameter D4 greater, of the order of millimeters, for example between about 7 mm and about 32 mm, than the internal diameter D1 of the central through hole 12 of the metal insert 11, while the third part 25 is able to be inserted into the central through hole 12 and has a fourth external diameter D5 which can be slightly smaller, of the order of tens of microns, for example between about 30 µm and about 50 µm, than the internal diameter D1.

The first conical part 22 has a third taper forming a third angle α2 with the second longitudinal axis X2, greater than the first angle α1 preferably by at least 3°.

Some embodiments of the present invention provide that, preferably, the third angle α2 is comprised between 28° and 32°. In the embodiment disclosed here, the third angle α2 is for example 30°.

Some embodiments of the present invention provide that the third external diameter D4 is slightly smaller, of the order of tenths of a millimeter, than the first external diameter D2 (fig. 8) of the first conical flare 15. In the embodiment disclosed here, the third external diameter D4 is indicatively comprised between about 11.5 mm and 11.8 mm.

The sizes can be modified and varied according to the conformation of the insert 11 with which the support elements 20, 21 have to cooperate.

The second support element 21 is configured to be mounted in the second half-shell 202 (figs. 10, 11 and 12) in a manner whereby it axially slides with respect thereto, and it is provided with a second conical part 26 (fig. 9) made at an external end 27 thereof and having a fourth taper forming a fourth angle β2 with the second longitudinal axis X2, greater than the second angle β1, preferably by at least 3°.

Some embodiments of the present invention provide that, preferably, the fourth angle β2 is comprised between 48° and 52°. In the embodiment disclosed here, the fourth angle β2 is approximately 50°.

Therefore, in the embodiment shown here, the difference between the angles α1 and α2 and between the angles β1 and β2 is 5°.

This difference can be even larger, or smaller, or different between the angles α1, α2 and β1, β2.

The external end 27 has a fifth external diameter D6 which is slightly smaller, of the order of tenths of a millimeter, than the second external diameter D3 (fig. 8) of the second conical flare 17. In the embodiment disclosed here, the fifth external diameter D6 is indicatively comprised between about 14.5 mm and 15 mm.

A spring 28 (figs. 10, 11 and 12), for example helical shaped or a conical spring washer, is interposed between an internal end 29 of the second support element 21, opposite the second conical part 26, and an internal wall 30 of the second half-shell 202, in order to impart a certain thrust force F (fig. 12) to the second support element 21 along the second longitudinal axis X2 during molding, as described in detail below.

In accordance with one aspect of the present invention, the first support element 20 and the second support element 21 are configured to cooperate with the first conical flare 15 (fig. 9) and with the second conical flare 17, respectively, keeping the second longitudinal axis X2 coincident with the first longitudinal axis X1, in order to realize the perfect centering of the metal insert 11 with the support elements 20, 21, for the reasons set forth below.

In fact, during the temporary coupling, that is, in order to mold an impeller 100, of the two support elements 20, 21 to the conical flares 15, 17, respectively, of the metal insert 11, thanks to the greater taper of the first conical flare 15 compared to that of the first conical part 22, when they cooperate with each other, keeping the first longitudinal axis X1 coincident with the second longitudinal axis X2, the first conical part 22 contacts the first conical flare 15 only along a first circumference 31 and, at the same time, thanks to the greater taper of the second conical flare 17 compared to that of the second conical part 26, when the latter cooperate with each other, always keeping the first longitudinal axis X1 coincident with the second longitudinal axis X2, the second conical part 26 contacts the second conical flare 17 only along a second circumference 32. Moreover, the two circumferences 31, 32 are thus perfectly parallel to each other and perpendicular to the longitudinal axes X1, X2.

We must clarify that when the first conical part 22 contacts the first conical flare 15, a first space, or gap, 33 is defined between them with a conical circumferential shape and a taper diverging from the first circumference 31 toward the inside of the central through hole 12, due to the difference between the first angle α1 and the third angle α2.

Similarly, when the second conical part 26 contacts the second conical flare 17, a second space, or gap, 35 is defined between them, also with a conical circumferential shape and a taper diverging from the second circumference 32 toward the inside of the central through hole, due to the difference between the second angle β1 and the fourth angle β2.

Furthermore, since the fourth external diameter D5 is slightly smaller than the first diameter D1, when the first conical part 22 is in contact with the first conical flare 15 of the metal insert 11, the second, cylindrical, part 20 is inserted with play into the central through hole 12 creating a third annular space, or gap, 36 between the metal insert 11 and the second, cylindrical, part 20. The width A of the third space 36 can be of the order of microns and is preferably comprised between about 30 µm and about 100 µm. In the embodiment shown here, the width A of the third space 36 is indicatively about 50 µm.

The present invention also concerns the method for producing the impellers 100 with the apparatus 10 described above, which essentially comprises the following steps, described in operating sequence with the aid of figs. from 10 to 12.

First of all, the metal insert 11 and the support elements 20, 21 are made, and the latter are associated with the two half-shells 201, 202, respectively, of the mold 200, as described above.

The method also comprises a loading step, shown schematically in fig. 10, in which the metal insert 11 is first positioned between the two support elements 20, 21, for example by means of a mechanical arm 203, with the first longitudinal axis X1 coincident with the second longitudinal axis X2, and then thrust toward the first support element 20 (on the left in fig. 10), which in the example given here is in a fixed position.

A closing step then follows, shown schematically in fig. 11, in which the second half-shell 202 is brought closer to the first half-shell 201, in any known manner whatsoever, so that the second support element 21 first comes into contact with its second conical part 26 against the second conical flare 17 of the metal insert 11 and then, continuing its travel, thrusts the first conical flare 15 of the latter against the first conical part 22 of the first support element 20.

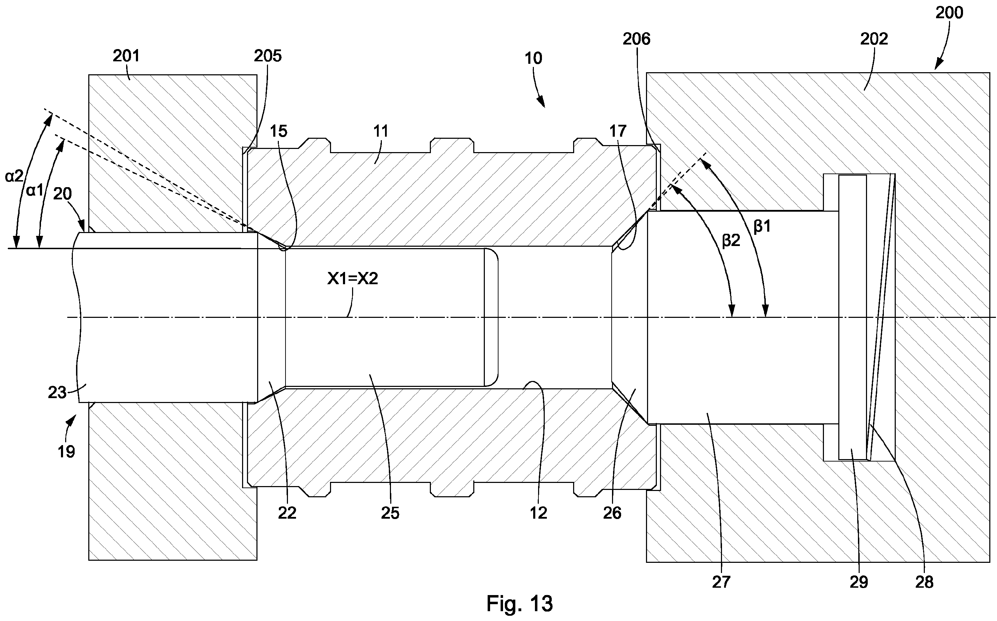

In more detail, when the second half-shell 202 is brought closer the first half-shell 201, the following occurs:
1) it is provided that, thanks to the thrust of the spring 28, the second conical part 26 of the second support element 21 protrudes from the second half-shell 202 toward the first half-shell 201 by a length such that, when the second half-shell 202 is, at this point, close to the metal insert 11, the second conical part 26 comes into contact with the second conical flare 17 before the contact between the second half-shell 202 and the metal insert 11 also occurs. The purpose of this is to guarantee that the centering between the second conical part 26 and the second conical flare 17 is optimal (see enlarged detail of fig. 13);
2) after this, making the second hal-shell 202 complete its travel of approach to the metal insert 11 results in a compression of the spring 28, while the second conical part 26 remains abutting and centered (therefore stationary) on the second conical flare 17, allowing for a relative movement between the second half-shell 202 and the second conical part 26, wherein the second half-shell 202 translates further in the direction of the first half-shell 201, until it comes into contact with the metal insert 11 and thus reaches its operating position (molding position) shown in figs. 12 and 13.

We must clarify that, thanks to the sufficient depth of the cavities 205 and 206, at the end of the closing step the metal insert 11 does not touch their internal wall, thus remaining centered only by the two centering means 19.

Therefore, at the end of the travel of the second half-shell 202 against the first half-shell 201, the two half-shells 201, 202 hold the metal insert 11 tight between them and perfectly centered, that is, with its longitudinal axis X1 perfectly coincident with the longitudinal axis X2 of the two support elements 20, 21, which is also the axis of the mold 200. In this position, the thrust force F axial to the second support element 21 toward the metal insert 11 and the first support element 20 is provided by the spring 28, therefore the thrust force F is predetermined and substantially constant. Furthermore, advantageously the parts of the two support elements 20 and 21 that are inserted into the central hole 12 of the metal insert 11 are provided with sizes (for example: the length of the part 25) such that the ends of the same two support elements 20 and 21 can never come into contact with each other. Any contact between these ends, in fact, could affect the coaxiality of the metal insert 11 relative to the second longitudinal axis X2.

An injection molding step then follows, which can take place in any known manner whatsoever, by injecting a suitable thermoplastic material into the injection chamber 204 of the mold 200 in order to form the blades 102 and the central hub 101 around the metal insert 11, which is thus embedded in the latter.

To promote an excellent embedding of the metal insert 11 in the central hub 101, the metal insert 11 is externally provided with circular ribs 37 (fig. 5) and knurls 39.

It is clear that modifications and/or additions of parts and/or steps may be made to the apparatus 10 and to the method as described heretofore, without thereby departing from the field and scope of the present invention, as defined by the attached claims.

It is also clear that, although the present invention has been described with reference to a specific example, a person of skill in the art will be able to achieve other equivalent forms of apparatuses for producing impellers by injection molding of plastic material, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Apparatus (10) for producing impellers (100) by injection molding using a mold (200) and thermoplastic material, wherein each of said impellers (100) comprises both a central hub (101) and a plurality of blades (102), made in a single body with said thermoplastic material, and also a metal insert (11) with a substantially tubular shape, embedded in said central hub (101) and provided with a central through hole (12) configured to be coupled to a corresponding command member suitable to make said impeller (100) rotate, wherein said central through hole (12) is coaxial to a first longitudinal axis (X) and is provided at its ends (16, 18) with a first conical flare (15) and with a second conical flare (17) with a respective first taper and second taper which form a first angle (α1) and a second angle (β1), respectively, with said first axis (X), wherein said apparatus (10) comprises centering means (19) able to be associated with, or forming part of, said mold (200) and comprising both a first support, or resting, element (20) coaxial to a second longitudinal axis (X2) and provided with a first conical part (22) with a third taper that forms a third angle (α2) with said second axis (X2), and also a second support, or resting, element (21) coaxial to said second axis (X2) and having a second conical part (26) with a fourth taper that forms a fourth angle (β2) with said second axis (X2), and **characterized in that** said third angle (α2) is greater than said first angle (α1) and said fourth angle (β2) is greater than said second angle (β1), **and in that** said first support element (20) and second support element (21) are configured to cooperate with said first conical flare (15) and with said second conical flare (17), respectively, of said metal insert (11), remaining coaxial thereto, to thus realize the perfect centering of said metal insert (11) with said support elements (20, 21) and consequently with said mold (200), during said injection molding.

2. Apparatus (10) as in claim 1, **characterized in that,** thanks to the greater taper of said first conical flare (15) compared to that of said first conical part (22), when they cooperate with each other, keeping said centering means (19) coaxial to said metal insert (11), said first conical part (22) is configured to contact said first conical flare (15) only along a first circumference (31), and thanks to the greater taper of said second conical flare (17) compared to that of said second conical part (26), when the latter cooperate with each other, keeping said centering means (19) coaxial to said metal insert (11), said second conical part (26) is configured to contact said second conical flare (17) only along a second circumference (32), said two circumferences (31, 32) resulting, during use, parallel to each other and perpendicular to said central through hole (12).

3. Apparatus (10) as in claim 2, **characterized in that** when said first conical part (22) contacts said first conical flare (15) there is defined between them a first space (33) with a conical circumferential shape and having a taper diverging from said first circumference (31) toward the inside of said central through hole (12), due to the difference between said first angle (α1) and said third angle (α2).

4. Apparatus (10) as in claim 2 or 3, **characterized in that** when said second conical part (26) contacts said second conical flare (17) there is defined between them a second space (35) with a conical circumferential shape and having a taper diverging from said second circumference (32) toward the inside of said central through hole (12), due to the difference between said second angle (β1) and said fourth angle (β2).

5. Apparatus (10) as in any claim hereinbefore, **characterized in that** said first angle (α1) is comprised between 10° and 30° and is preferably 25°, while said third angle (α2) is comprised between 28° and 32° and is preferably 30°.

6. Apparatus (10) as in any claim hereinbefore, **characterized in that** said second angle (β1) is comprised between 30° and 60° and is preferably 45°, while said fourth angle (β2) is comprised between 48° and 52° and is preferably 50°.

7. Apparatus (10) as in claim 1, wherein said central through hole (12) has a certain internal diameter (D1), said first conical flare (15) has a first external diameter (D2) and said second conical flare (17) has a second external diameter (D3), **characterized in that** said first support element (20) comprises both a second, cylindrical, part (23) disposed axially on a first side of said first conical part (22) and having a third external diameter (D4) greater than said internal diameter (D1) and smaller than said first external diameter (D2), and also a third, cylindrical, part (25) disposed axially on a second side of said first conical part (22), opposite said first side, and having a fourth external diameter (D5) smaller than said internal diameter (D1), so that when said first conical part (22) is in contact with said first conical flare (15), said third, cylindrical, part (25) is inserted with play into said central through hole (12) creating a third annular space (36) between said metal insert (11) and said third, cylindrical, part (25).

8. Apparatus (10) as in claim 7, **characterized in that** the width (A) of said third space (36) is of the order of micrometers, is preferably comprised between 30 µm and 100 µm and even more preferably is 50 µm.

9. Method for producing impellers (100) by injection molding using a mold (200) and thermoplastic material, wherein each of said impellers (100) comprises both a central hub (101) and a plurality of blades (102), made in a single body with said thermoplastic material, and also a metal insert (11) with a substantially tubular shape, embedded in said central hub (101) and provided with a central through hole (12) configured to be coupled to a corresponding command member suitable to make said impeller (100) rotate, wherein said central through hole (12) is coaxial to a first longitudinal axis (X) and is provided at its ends (16, 18) with a first conical flare (15) and with a second conical flare (17) with a respective first taper and second taper which form a first angle (α1) and a second angle (β1), respectively, with said first axis (X), **characterized in that it** comprises:
- a first step in which centering means (19) are created that can be associated with, or are part of, said mold (200) and comprise both a first support, or resting, element (20) coaxial to a second longitudinal axis (X2) and provided with a first conical part (22) with a third taper which forms a third angle (α2), greater than said first angle (α1), with said second axis (X2), and also a second support, or resting, element (21) coaxial to said second axis (X2), provided with a second conical part (26) with a fourth taper which forms a fourth angle (β2), greater than said second angle (β1), with said second axis (X);
- a second step, following said first step, in which said first support element (20) and said second support element (21) are made to cooperate with said first conical flare (15) and with said second conical flare (17), respectively, remaining coaxial to said metal insert (11), thus realizing the perfect centering of said metal insert (11) with said support elements (20, 21) and consequently with said mold (200); and
- a third step, or molding step, following said second step, in which said thermoplastic material is injected into an injection chamber (204) of said mold (200) to create said blades (102) and said central hub (101), embedding said metal insert (11) in the latter.

10. Method as in claim 9, **characterized in that,** thanks to the greater taper of said first conical flare (15) compared to that of said first conical part (22), when they cooperate with each other, keeping said centering means (19) coaxial to said metal insert (11), said first conical part (22) contacts said first conical flare (15) only along a first circumference (31), and thanks to the greater taper of said second conical flare (17) compared to that of said second conical part (26), when the latter cooperate with each other, keeping said centering means (19) coaxial to said metal insert (11), said second conical part (26) contacts said second conical flare (17) only along a second circumference (32), said two circumferences (31, 32) thus being parallel to each other and perpendicular to said central through hole (12).

11. Method as in claim 9 or 10, **characterized in that** it also comprises, in sequence, between said first step and said second step: a loading step, in which said metal insert (11) is first positioned between said two support elements (20, 21), with the latter coaxial to said metal insert (11), and then thrust toward said first support element (20); and a closing step, in which said second support element (21) is displaced axially, first in order to take its second conical part (26) against said second conical flare (17) of said metal insert (11) and then, continuing its travel, to thrust said first conical flare (15) against said first conical part (22) of said first support element (20), imparting a certain axial thrust force (F).

12. Method as in one or the other of the previous claims, **characterized in that** said mold (200) comprises a first half-shell, or matrix, (201) with which said first support element (20) is associated, and a second half-shell, or punch, (202), selectively movable with respect to the matrix (201) in order to define said injection chamber (204) therewith, with which said second support element (21) is associated.

13. Method as in claims 11 and 12, **characterized in that** a spring (28) is interposed between an internal end (29) of the second support element (21), opposite the second conical part (26), and an internal wall (30) of the second half-shell (202) in order to give said second support element (21) a certain thrust force (F) along said second longitudinal axis (X2).

14. Method as in claim 13, **characterized in that** in said closing step said spring (28) thrusts said second support element (21) in such a way that said second conical part (26) protrudes from said second half-shell (202) toward said first half-shell (201) by a length such that, when said second half-shell (202) is close to said metal insert (11), said second conical part (26) comes into contact with said second conical flare (17) before contact occurs between said second half-shell (202) and said metal insert (11).
